# EUROPEAN PATENT APPLICATION

(11) **EP 3 147 841 A1**
(43) Date of publication of application: **29.03.2017**
(21) Application number: 16190017.0
(22) Date of filing: 22.09.2016
(51) Int. Cl.: G06Q 10/08

(54) **SYSTEM FOR MONITORING THE CONDITION OF PACKAGES THROUGHOUT TRANSIT**

(30) Priority: 25.09.2015 US 201514865575
(71) Applicant: Hand Held Products, Inc., Fort Mill, SC 29707 (US)
(72) Inventor: LLOYD, Ryan Andrew, Morris Plains, NJ New Jersey 07950 (US); MCCLOSKEY, Scott, Morris Plains, NJ New Jersey 07950 (US); QUINONES, Steve, Morris Plains, NJ New Jersey 07950 (US)
(74) Representative: Houghton, Mark Phillip

(57) **Abstract**

Systems and methods are provided for monitoring the condition of packages at various checkpoints when the packages are being shipped. A package status monitoring system, according to one implementation, comprises a plurality of package analyzers, a package status server, and a database. The package analyzers are configured to analyze the condition of a package at multiple locations as the package is transported from a starting location to a final destination. Each package analyzer is configured to produce package status information regarding the condition of the package. The package status server is configured to receive the package status information from the multiple locations through a communications network. The database is configured to store the package status information received by the package status server. The package status server enables a remote user device to access the package status information.

## Description

### FIELD OF THE INVENTION

The present invention relates to shipping and logistics and more particularly relates to monitoring the condition of packages during shipment.

### BACKGROUND

Generally speaking, when packages are delivered from a starting point to a final destination, shipping and logistics companies have been able to track the packages at multiple locations along the route. Also, shipping and logistics companies may sometimes assess the condition of a package when it is first picked up and may assess the condition again when it is delivered at its final destination. Usually, the assessment of a package's condition is a visual spot check by employees of the shipping and logistics companies to determine if any damage has occurred before or during transit.

If a package has been insured but is damaged during the shipping process, the shipping and logistics companies will typically pay for damages. However, without adequate record keeping, it may be difficult to determine if a package was already damaged at the time it was picked up or if the package was damaged while being transported. Exacerbating the problem of damaged packages is that a large amount of theft by shipping employees occurs when an already-damaged package is looted.

Therefore, a need exists for shipping and logistics companies to not only track the location of packages, but also monitor the condition of packages during transit.

### SUMMARY

Accordingly, in one aspect, the present invention embraces systems and methods for monitoring the condition of packages during shipment. In an exemplary embodiment, a package status monitoring system comprises a plurality of package analyzers, a package status server, and a database. The package analyzers are configured to analyze the condition of a package at multiple locations as the package is transported from a starting location to a final destination. Each package analyzer is configured to produce package status information regarding the condition of the package. The package status server is configured to receive the package status information from the multiple locations through a communications network. The database is configured to store the package status information received by the package status server. The package status server enables a remote user device to access the package status information.

In another exemplary embodiment, a package analyzing device includes a camera configured to capture at least one image of a package at one of a plurality of locations during transit of the package from a starting location to a final destination. The package analyzing device also includes a graphics processing unit configured to analyze the at least one image to determine the presence of a defect in an outside surface of the package. A communication interface is configured to transfer package status information to a package status server, which receives package status information of the package from the plurality of locations. The package status information includes package identification information, the at least one image, a timestamp of when the at least one image was captured, and the location of the camera when the at least one image was captured.

In yet another exemplary embodiment, a dimensioner may be configured to include a range camera configured to capture images of multiple sides of a package. The range camera has a known location of a plurality of locations during transit of the package from a starting location to a final destination. The dimensioner also includes a processing device configured to analyze the images to determine the presence of one or more defects in the sides of the package. The processing device is further configured to determine the physical dimensions of the package.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a diagram of a package status monitoring system according to various implementations of the present invention.
Figure 2 schematically depicts a diagram of a package monitoring station according to various implementations of the present invention.
Figure 3 schematically depicts a diagram of a portable package analyzing device according to various implementations of the present invention.
Figure 4 schematically depicts a block diagram of a first embodiment of the package analyzing devices shown in Figures 2 and 3 according to various implementations of the present invention.
Figure 5 schematically depicts a block diagram of a second embodiment of the package analyzing devices shown in Figures 2 and 3 according to various implementations of the present invention.
Figures 6A through 6D schematically depict block diagrams of the package defect analyzing unit shown in Figures 4 and 5 according to various implementations of the present invention.
Figure 7 schematically depicts an image captured by a camera of the package analyzing devices shown in Figures 2 and 3 according to various implementations of the present invention.
Figure 8 schematically depicts an ideal image of a package according to various implementations of the present invention.
Figure 9 schematically depicts a diagram of a voxel grid representing the defect shown in Figure 7 according to various implementations of the present invention.

### DETAILED DESCRIPTION

The present invention is directed to the field of shipping and logistics and more particularly to monitoring the condition of packages. Shipping and logistics companies typically perform a rudimentary check of packages at the beginning and end of a delivery route. If packages are damaged during delivery, the customers may receive compensation from the shipping and logistics companies. However, it can be difficult to monitor when a package was actually damaged or to determine if the package was already damaged even before being handled by the employees of the shipping and logistics companies. Also, it has been found that when a package is already damaged, the rate of theft by shipping employees typically increases significantly.

For many years, the process of tracking the location of a package along its route has been a service that shipping and logistics companies have provided. In addition to tracking, though, the present invention more particularly relates to systems and methods for monitoring the integrity or condition of packages along the shipping routes. Monitoring the condition of packages can help to resolve insurance claims and prevent fraudulent claims by customers. Also, condition monitoring can help to determine one or more problematic locations along the route where packages experience a higher rate of damage. In addition, information regarding the condition of a package throughout its journey can be used to help reduce theft by shipping employees.

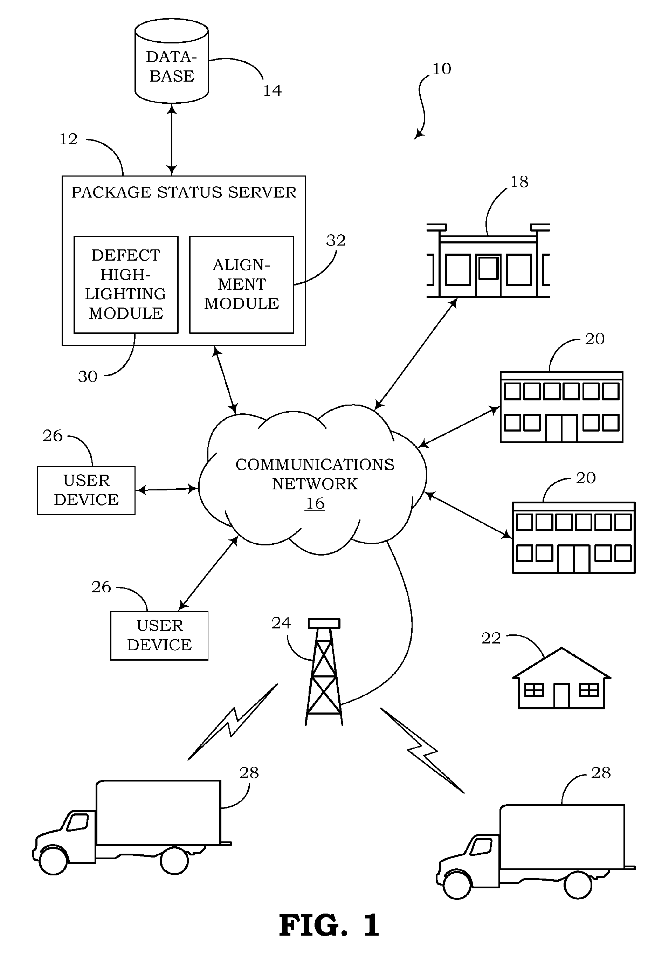

FIG. 1 is a diagram illustrating an embodiment of a package status monitoring system 10. The package status monitoring system 10 may include, among other things, a package status server 12, a database 14, a communications network 16, at least one drop off facility 18, a plurality of distribution hubs 20 or distribution centers, at least one customer location 22, at least one wireless communication antenna 24 and/or satellite, and a plurality of user devices 26. A plurality of delivery vehicles 28 may be equipped with wireless communication transceivers for communicating to the package status server 12 via the antenna 24 or satellite and the communications network 16.

The package status server 12 receives information from various sources within the package status monitoring system 10. The received information includes data regarding the condition of one or more packages at various checkpoints throughout the system 10.

The package status server 12 may be incorporated in an existing waybill system or, in another embodiment, may be a stand-alone entity. The package status server 12, according to some embodiments, includes a defect highlighting module 30 and an alignment module 32. In some implementations, the defect highlighting module 30 may instead be incorporated in package analyzing devices positioned at the various checkpoints. A description of the defect highlighting module 30, alignment module 32, and package analyzing devices is provided in more detail below.

The drop off facility 18 may be a shipping center where customers may drop off packages to be delivered. In some embodiments, the drop off facility 18 may not be necessary, such as in a system where packages are stored in a warehouse and then delivered from the warehouse to customers. During the process of transporting packages, the packages may be temporarily delivered to one or more distribution hubs 20, from which the packages can then be delivered to another distribution hub 20 or to the customer location 22. The customer location 22 may be a home, business, or other location where a package is to be delivered as its final destination. Delivery among the drop off facility 18, distribution hubs 20, and customer location 22 may be accomplished by one or more of the delivery vehicles 28 or by other modes of transportation, such as by train, truck, van, car, boat, etc.

At various checkpoints, the condition of the package can be monitored to determine if the package has incurred any damage. The checkpoints may include the starting location (e.g., the drop off facility 18 or warehouse) and the final destination (e.g., the customer location 22). Also, the checkpoints may include various points in between the starting location and final destination (e.g., the distribution hubs 20 and delivery vehicles 28). Also, time information is obtained regarding when the package is handled at the various checkpoints (e.g., when loaded onto or unloaded from the delivery vehicle 28, when processed at the distribution hubs 20, etc.).

Location information can also be obtained along with the information regarding the condition of the package and the time when the condition was assessed. The location information may correspond to various checkpoint locations, which may be stationary locations (e.g., drop off facility 18, distribution hub 20, and customer location 22) and/or changeable locations (e.g., various locations of the delivery vehicles 28). For changeable locations, the location information may include Global Positioning System (GPS) coordinates and/or information regarding the particular deliver vehicle 28 associated with the location at the particular time of package handling.

The package condition information, time information, and location information is communicated to the package status server 12 via the communications network 16, which may include one or more wide area networks (WANs), such as the Internet, local area networks (LANs), cellular communication networks, and/or other networks.

The package status information that is communicated to the package status server 12 may also include an identification of the package, such as a tracking number, serial number, barcode information, or other identification information. Also, the package condition information transmitted to the package status server 12 may include defect information, captured images, etc. Along with the identification and condition of the package, the package status information may also include a timestamp comprising the time and date that images were captured or when the information was received by the package status server 12. The package status information may also include the location information, which may be the fixed or variable location coordinates of the various checkpoints, as mentioned above.

The package status information regarding a package is stored in the database 14. The package status server 12 may then access the package status information to utilize this information as needed. The database 14 may be configured with enough memory to store condition information for any number of packages. Also, the status information obtained at the various checkpoints may be grouped and stored together in the database 14 for each package, such as in a table or other organized memory structure.

The alignment module 32 of the package status server 12 is configured to align images of a single package captured at various checkpoints to determine where the package may have experienced damage. If a particular surface of the package is considered to be fine according to a first set of condition data but is then determined to have a defect at a later time, the package status server 12 can deduct that the damage occurred at some time between the two corresponding checkpoints.

The package status monitoring system 10 also includes one or more user devices 26, which are configured to enable a user to access the information that is stored in the database 14. The package status server 12 may enable the user devices 26 to perform only a limited number of functions or access a limited amount of data, based on whether the user is a customer, a shipping employee, a supervisor, a driver, or other person associated with the shipping processes.

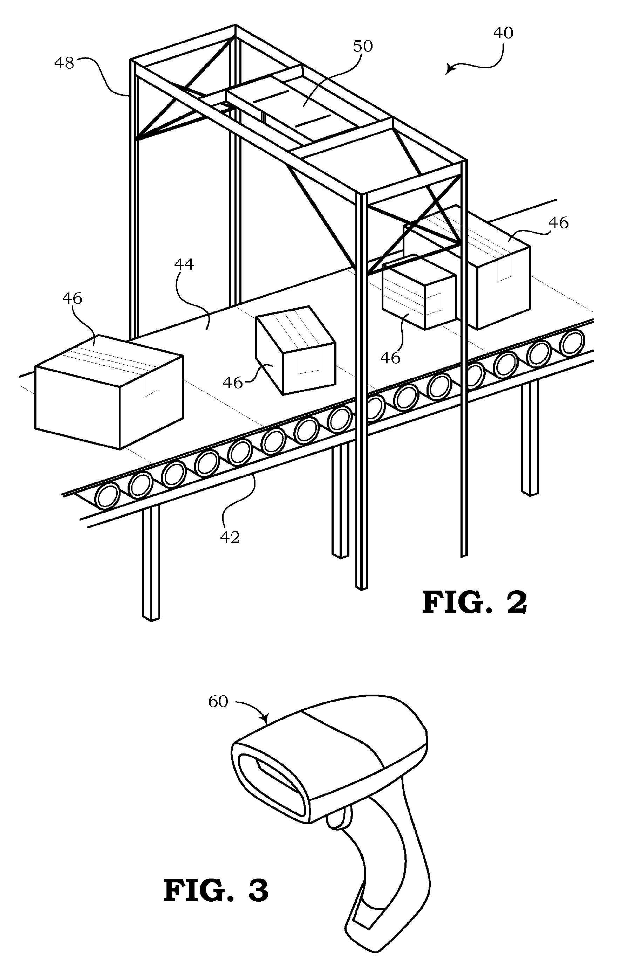

FIG. 2 is a diagram showing an embodiment of a package monitoring station 40. In this embodiment, the package monitoring station 40 is a fixed station that may be housed in one or more of the distribution hubs 20 shown in FIG. 1 or in another package checkpoint location. The package monitoring station 40 includes a conveyor system 42 that has at least a conveyor belt 44. Packages 46 are placed on the conveyor belt 44 and are transported under a support structure 48. The support structure 48 includes any suitable structure to position a package analyzing device 50 in a fixed position above or near the conveyor belt 44.

The package analyzing device 50 may represent one of various types of package analyzing devices positioned at various checkpoints throughout a transportation route of a package, as referenced above with respect to FIG. 1. According to some embodiments, the package analyzing device 50 may be incorporated in a dimensioner that also determines the dimensions of packages.

The package analyzing device 50 is configured to optically sense the packages 46 to determine if the packages 46 have been damaged. In particular, the package analyzing device 50 may be configured to sense if one or more exterior surfaces of the packages 46 are dented or crushed or if the packages 46 include protrusions, bulges, tents, or holes. Dents and crushes are defined as portions of the packages that have missing volume compared with an ideal package shape. Protrusions, bulges, and tents are defined as portions of the packages that have extra volume compared with an ideal package shape.

The package analyzing device 50 may include an image capture device for capturing images of the packages 46 from different angles. The image capture device may be a camera, a range camera, or other imaging device for optically sensing the packages 46. In order to obtain images from different angles, the conveyor system 42 may be equipped with a turntable or other mechanical device that turns or flips packages. Also, multiple cameras may be used to obtain images from various angles.

In some embodiments, the package analyzing device 50 may include various graphical processing components for analyzing two-dimensional and three-dimensional defects on the exterior surface of the package. By analyzing information obtained by the image capture devices, the graphics processing components are able to perform a number of processing steps as described in more detail below.

FIG. 3 is a diagram illustrating another embodiment of a package analyzing device 60. The package analyzing device 60 of FIG. 3 may be similar in functionality to the package analyzing device 50 shown in FIG. 2. However, the package analyzing device 60 may be portable and can be manipulated by a worker to optimize its position with respect to a package for easily obtaining images of the package from different angles. The package analyzing device 60 can be used at any checkpoint along the shipping route, such as at the drop off facility 18, one or more of the distribution hubs 20, and on the delivery vehicle 28 when loading or unloading.

Like the package analyzing device 50 shown in FIG. 2, the package analyzing device 60 of FIG. 3 is configured to optically sense packages (e.g., packages 46) to determine if the packages have been damaged. The package analyzing device 60 may be configured to sense whether or not one or more exterior surfaces of the packages have missing volume (e.g., dented or crushed), extra volume (e.g., protrusions, bulges, tents), or holes. According to some embodiments, the package analyzing device 60 may be incorporated in a dimensioner, which is typically configured to simply determine the dimensions of a package.

The package analyzing device 60 may also include a camera (e.g., a range camera) and various graphics processing components for determining if there are any defects on the surfaces of the package by processing the graphical information obtained by the camera. The graphics processing components may be configured in hardware, software, firmware, and/or any combination thereof. The package analyzing device 60 may also include laser-based barcode sensing components for detecting and decoding barcodes. And in other embodiments, the package analyzing device 60 may be incorporated in a barcode reader itself.

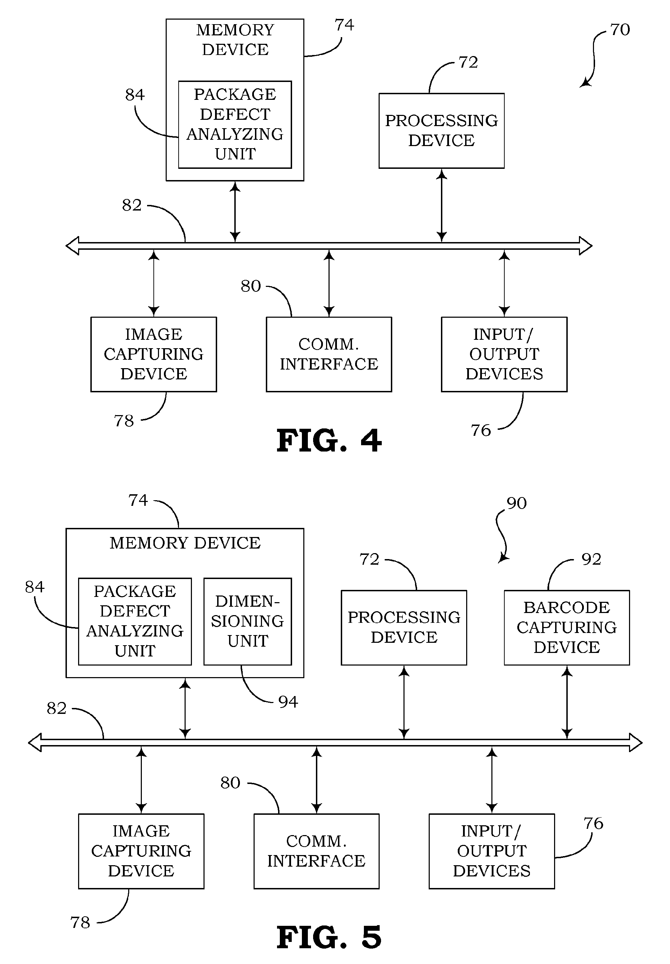

FIG. 4 is a block diagram illustrating a first embodiment of a circuit 70 of a package analyzing device. According to some embodiments, the circuit 70 may represent circuitry that is incorporated in the package analyzing device 40 shown in FIG. 2 or the package analyzing device 50 of FIG. 3. In this embodiment, the circuit 70 includes a processing device 72, a memory device 74, input/output devices 76, an image capturing device 78, and a communication interface 80, each element of which may be interconnected and in communication with the other elements via a bus interface 82.

The circuit 70 also includes a package defect analyzing unit 84. According to various embodiments, the package defect analyzing unit 84 may be configured as software, firmware, and/or hardware and stored or incorporated in one or both of the memory device 74 and processing device 72. The package defect analyzing unit 84 may be implemented in software or firmware that is stored in the memory device 74 and that is executable by the processing device 72. If implemented in hardware, the package defect analyzing unit 84 may be configured as discrete logic circuitry, an application specific integrated circuit (ASIC), a programmable gate array (PGA), a field programmable gate array (FPGA), or any combinations thereof within the processing device 72.

The processing device 72 may be a general-purpose or specific-purpose processor or microcontroller for controlling the operations and functions of the circuit 70. In some implementations, the processing device 72 may include a plurality of processors for performing different functions within the circuit 70. The processing device 72 may be a graphics processing unit according to some embodiments.

The memory device 74 may include one or more internally fixed storage units and/or removable storage units, each including a tangible storage medium. The various storage units may include any combination of volatile memory (e.g., random access memory (RAM), dynamic RAM (DRAM), etc.) and non-volatile memory (e.g., read only memory (ROM), electrically erasable programmable ROM (EEPROM), flash memory, etc.). The storage units may be configured to store any combination of information, data, instructions, software code, etc.

The input/output devices 76 may include various data entry devices and data output devices. For example, the data entry devices may include one or more keypads, buttons, switches, touch pads, touch screens, or other devices for enabling a user to input data or selections. The data output devices may include one or more visual display devices (e.g., display screens, touch screens, light emitting diodes, liquid crystal displays, etc.), audio output device (e.g., speakers, alarms, etc.), or other devices for providing output to a user.

The image capturing device 78 may be a camera, a range camera, or other visual sensing device and is configured to capture images of one or more packages. In some embodiments, the image capturing device 78 may sense colored (i.e., RGB) images. According to other embodiments, the image capturing device 78 may sense distance or range information to receive dimensional information about the size and shape of the packages 46.

The processing device 72 processes the image information using the package defect analyzing unit 84 to determine if one or more surface of a package includes a defect. The processing device 72 can also determine certain characteristics of the defects, such as an offset distance of the surface of the package compared to an ideal package shape. For example, a crushed corner may be detected by determining that a package lacks definition where the corner of an ideal box would exist. The processing device 72 can also define the location of the defects on the package and vector information regarding the magnitude and direction of dents and/or bulges.

The package defect analyzing unit 84 may be utilized to determine one or more defects. When more than one defect is detected, each defect may be analyzed, classified, and recorded separately from the other defects.

The communication interface 80 is configured to transmit package information to the package status server 12 shown in FIG. 1 via the communications network 16. The package information may pertain to an identification of the package, images of the package, results of the package defect analysis, time/date information, and checkpoint location information. The communication interface 80 may include connectors and wired transmission lines leading to the communications network 16 via a modem, router, and/or other network components. In some embodiments, the communication interface 80 may use wireless communication for short range communication (e.g., WI-FI^{™}, BLUETOOTH^{™}, etc.) or a longer range communication (e.g., cellular transmission) via a hotspot, wireless modem, cell tower, satellite, etc.

FIG. 5 is a block diagram showing a second embodiment of a circuit 90 incorporated in a package analyzing device such as the package analyzing device 40 shown in FIG. 2 or the package analyzing device 60 of FIG. 3. In the embodiment of FIG. 5, the circuit 90 includes the same components shown in FIG. 4 and described above. For the sake of brevity, the description of the same components is not repeated here.

The circuit 90, however, includes additional elements. For example, the circuit 90 may include a barcode capturing device 92. In some embodiments, the barcode capturing device 92 may be a laser-based barcode reading device. In other embodiments, the circuitry 70 of FIG. 4 may be disposed in a conventional barcode reader to enable the barcode reader to have the additional functionality of analyzing package defects as disclosed herein.

Also, circuit 90 may include a dimensioning unit 94, which may be configured in software, firmware, and/or hardware. The dimensioning unit 94 may be stored in the memory device 74 and/or configured in the processing device 72. The dimensioning unit 94 allows the processing device 72 to utilize the captured images obtained by the image capturing device 78 to calculate the dimensions, such as length, width, and height, of a package. In some embodiments, the circuit 70 of FIG. 4 may be disposed in a conventional dimensioning device to enable the dimensioning device to have the additional functionality of analyzing package defects as disclosed herein.

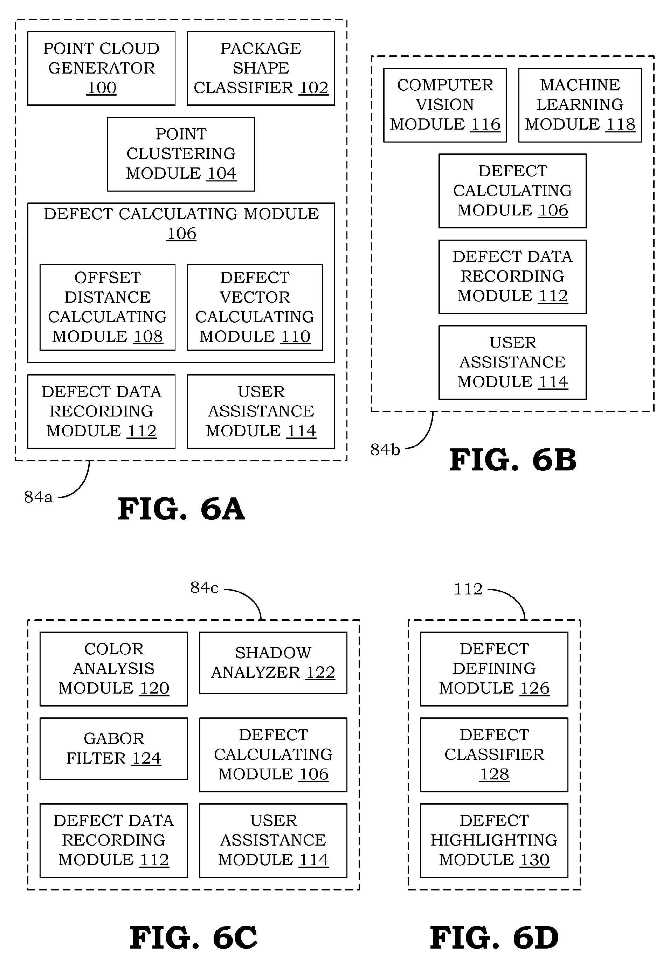

FIGS. 6A-6D, collectively referred to herein as FIG. 6, are block diagrams illustrating embodiments of the package defect analyzing unit 84 shown in FIGS. 4 and 5. In particular, FIGS. 6A-6C are three embodiments of the package defect analyzing unit 84, labeled in these drawings with reference characters 84a, 84b, and 84c, respectively, to represent the different embodiments. FIG. 6D is an embodiment of the defect data recording module 112 shown in FIGS. 6A-6C.

The blocks illustrated in FIG. 6 include logic and/or operational elements for analyzing defects on the exterior surfaces of packages. For example, the logic and/or operational elements may be configured to enable the processing device 72 to perform various operations, such as determine the desired shape of a package, compare the actual images of the package with an ideal shape, and determine defects based on the comparison. The processing device 72 may also be enabled to use artificial intelligence, such as computer vision techniques/algorithms and machine learning techniques/algorithms to detect defects. The processing device 72 may also process graphical images using color analysis, shadow analysis, and/or texture analysis techniques and algorithms.

Once the condition or integrity of the package is calculated and any defects are sensed, the processing device 72 may further be configured to provide numerical or other descriptive information for defining defects, classify the types of defects detected, and graphically highlight the defects for display purposes on a user interface. Also, in some embodiments, the processing device 72 may control the input/output devices 76 to provide instructions to a user for assisting with the image capture of the packages. For example, the instructions may include steps for turning a package in one or more directions to enable the image capturing device 78 to obtain images from different angles to allow all sides of the package to be analyzed.

FIG. 6A is a block diagram illustrating a first embodiment of a package defect analyzing unit 84a. In this embodiment, the package defect analyzing unit 84a includes a point cloud generator 100, a package shape classifier 102, a point clustering module 104, and a defect calculating module 106. The defect calculating module 106, according to some embodiments, may include an offset distance calculating module 108 and a defect vector calculating module 110. In addition, the package defect analyzing unit 84a of FIG. 6A includes a defect data recording module 112 and a user assistance module 114.

The point cloud generator 100 is configured to receive images of a package and create a group or cloud of points representing the various points on the exterior surface of the package. The point cloud can be used to determine the physical size and shape of the package. From the collection of points, the package shape classifier 102 is configured to determine the shape that best describes the package. The calculated shape can be referred to as the ideal package shape. For example, some package shapes may include rectangular boxes, cylindrical tubes, etc. The package shape classifier 102 provides size and dimension information of the ideal package shape to which the package being analyzed can be compared.

The point clustering module 104 may operate in conjunction with the defect calculating module 106 to determine defects. More particularly, the point clustering module 104 may be used to determine how many defects a package may have. If there is more than one defect, the points of the point cloud for each defect can be clustered together by the point clustering module 104. By clustering the points in each portion of the surfaces of the package, the defects can be isolated from each other and can be processed individually. Otherwise, if the points from one defect are analyzed with the points from another defect, an accurate description of the defect might not be achieved. In some embodiments, the point clustering module 104 may utilize a Euclidean clustering process to help isolate the defects.

The defect calculating module 106 receives information of the points of the actual package obtained by the point cloud generator 100 and points of the ideal package obtained by the package shape classifier 102 for each defect. The defect calculating module 106 compares the point cloud of the actual package with the points of the ideal package shape. The offset distance calculating module 108 may be configured to detect the difference or offset from the actual points to the ideal points.

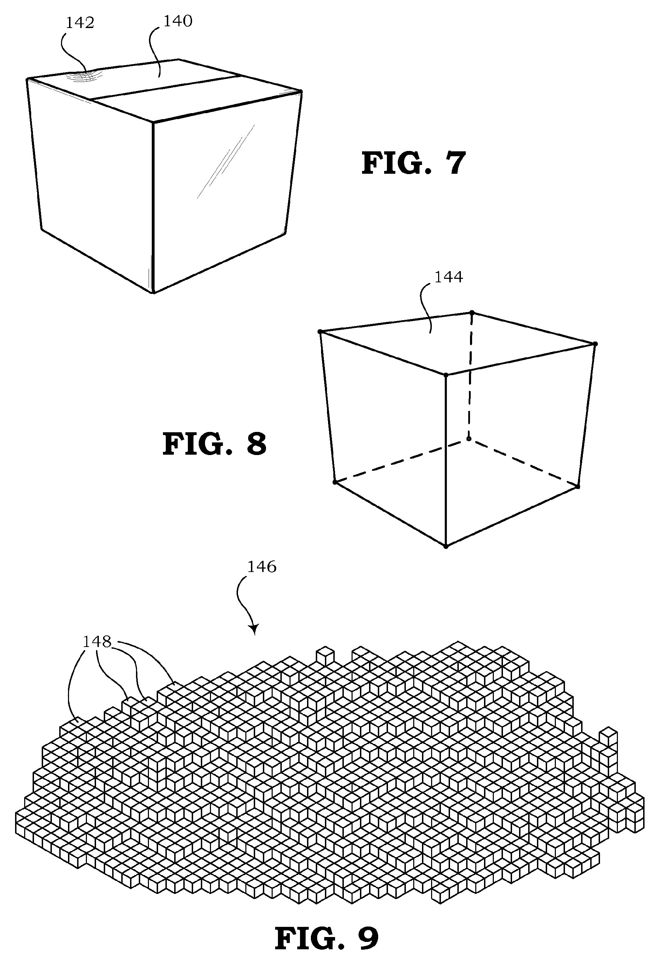

The point clustering module 104 may be configured to group together the detected offsets that are located in the same general area of the surface of the package. The offsets or clusters of offset points may include one or more defects having a positive offset or extra volume, one or more defects having a negative offset or missing volume, or both. The offset distance calculating module 108, in coordination with the point clustering module 104, may model the various offsets of a defect by generating a voxel grid, as illustrated in FIG. 9.

The points representing positive or negative offsets on the outer surface of the package with respect to the ideal package shape can be analyzed to determine the distance of offset. The offset distance calculating module 108 may first determine if the offset is at least a minimum tolerance (e.g., about 10 mm). Any offset from the ideal of less than the minimum tolerance can be ignored and is considered normal.

The defect calculating module 106 may also include a defect vector calculating module 110, which is configured to determine one or more vectors, such as eigenvectors, for defining the location and direction of the defects. The defect calculating module 106 is configured to analyze the points, voxels, and vectors to obtain data about the one or more defects on the surfaces of the package.

When the package defect analyzing unit 84a has calculated parameters of defects, the defect data recording module 112 may be configured to record information about the defect in the memory device 74 shown in FIGS. 4 and 5. From the memory device 74, the package analysis information can be communicated to the package status server 12 shown in FIG. 1 via the communications network 16.

The user assistance module 114 may include instructions for prompting a user to manipulate a package in order that the image capturing device 78 can capture images from various angles. The user assistance module 114 may provide visual cues, such as augmented reality images or video superimposed over the actual images of the package.

It should be noted that the defect data recording module 112 and user assistance module 114 may also be included in each of the embodiments of FIGS. 6A-6C. Description of these modules will therefore not be repeated below for the sake of brevity.

FIG. 6B is a block diagram showing an embodiment of the package defect analyzing unit 84b, which includes a computer vision module 116, machine learning module 118, defect calculating module 106, defect data recording module 112, and user assistance module 114. This embodiment may be used when three-dimensional data is not available. Using standard two-dimensional images, the computer vision module 116 and machine learning module 118 may use artificial intelligence to analyze characteristics of the surfaces of the packages in order to determine information that can be used by the defect calculating module 106 to calculate data regarding one or more defects on the surfaces of the package.

Various visual features can be extracted from the two-dimensional images and analyzed with respect to a learned model of an ideal package. The computer vision module 116 and machine learning module 118 are configured to assign a binary label representing damaged and undamaged surfaces. The training to create the learned model may include images corresponding to high-confidence detections of the same or similar packages.

FIG. 6C is a block diagram illustrating an embodiment of the package defect analyzing unit 84c, which includes a color analysis module 120, a shadow analyzer 122, a Gabor filter 124, a defect calculating module 106, a defect data recording module 112, and a user assistance module 114. Using color or RGB images captured by the image capturing device 78, the color analysis module 120 may be configured to detect inconsistencies in the colors on the surfaces of the package.

The shadow analyzer 122 may also use the images to detect different shades on the surfaces. For example, a darker shade or shadow may be indicative of dents or crushes. Also, the shadow analyzer 122 may also detect surface areas that have a brighter shade, which may be indicative of protrusions, bulges, or tents. The shadow analyzer 122 may also be configured to detect holes.

The Gabor filter 124 may be configured to detect surface informalities in the packages. For example, the Gabor filter 124 may be able to detect a zig-zag pattern on the exterior surface, which may be indicative of a crush. Also, the Gabor filter 124 may be able to detect holes and tears.

The defect calculating module 106 shown in FIG. 6C may obtain data from one or more of the color analysis module 120, shadow analyzer 122, and Gabor filter 124. With the data, one or more defects may be calculated on the exterior surfaces of the package.

FIG. 6D is a block diagram of the defect data recording module 112 shown in FIGS. 6A-6C. In this embodiment, the defect data recording module 112 includes a defect defining module 126, a defect classifier 128, and a defect highlighting module 130. As mentioned above with respect to FIG. 1, the defect highlighting module 30, 130 may be incorporated in either or both of the package status server 12 and package analyzing devices 40, 60.

The defect defining module 126 may be configured to define the defects. In particular, the parameters, units of measure, and other aspects for characterizing defects may be provided. The defect classifier 128 may be configured to use the parameters defining the defects to classify the defects as one of a dent, crush, protrusion, bulge, tent, or hole.

Also, the defect highlighting module 130 may be configured to graphically highlight any defects. Highlighting may include color coding different defects, overlaying images of the packages with descriptive information about the defects, displaying a voxel grid, as shown in FIG. 9, outlining an image of the defect, using arrows and pointers to call attention to the defects, or other various highlighting techniques.

The alignment module 32 of the package status server 12 shown in FIG. 1 may be configured to compare images of a single package at various stages of delivery to determine a location between checkpoints where the package may have been damaged. The package status server 12 can also perform other graphic processing operations to further analyze the condition of the packages, as is described with respect to the package analyzing devices 40, 60.

FIG. 7 shows an example of an image of a package 140 that may be captured by the image capturing device 78 shown in FIGS. 4 and 5. In this example, the package 140 includes a defect 142 (e.g., a dent) in at least one surface of the package 140. FIG. 8 shows an image of an ideal package 144 that may be calculated based on the general dimensions of the package 140. The ideal package 144 shows the ideal shape that the package 140 should have if there were no defects. Instead, since the package 140 includes the defect 142, the package defect analyzing unit 84 shown in FIGS. 4 and 5 allows images of the package 140 to be graphically processed to determine the characteristics of the defect. For example, the package defect analyzing unit 84a of FIG. 6A may analyze the points on the package 140 that are missing with respect to the ideal package 144.

FIG. 9 is a diagram showing an example of a voxel grid 146 representing the defect 142 shown in FIG. 7. Instead of using points of a point cloud, the voxel grid 146 includes small cubes 148 or voxels each having a predetermined volume. For example, each side of the cubes 148 may have a width of about 5 mm. The voxel grid 146 may show either missing (i.e., negative) volume or extra (i.e., positive) volume. The missing or extra volume can be calculated based on the number of cubes 148 needed to fill in (or to remove from) the actual package 140 to get to the size and shape of the ideal package 144. When clustered for a particular defect, such as defect 142, the cubes 148 make up the volume that differs from the ideal volume. In some embodiments, the volume can be calculated by the defect calculating module 106 using a technique that determines a three-dimensional convex hull containing the voxels 148 or that determines a minimum volume bounding box. Other techniques and/or algorithms may be used to analyze the defect 142.

With the embodiments discussed herein, shipping and logistics companies can better manage information about the status of packages during shipment. If damage is caused to packages, the systems and methods of the present invention can determine where and when the damage occurred. If faced with a fraudulent claim about package damage, the shipping and logistics companies can challenge the claims with the data obtained at each of the various checkpoints.

To supplement the present disclosure, this application incorporates entirely by reference the following commonly assigned patents, patent application publications, and patent applications:
U.S. Patent No. 6,832,725; U.S. Patent No. 7,128,266;
U.S. Patent No. 7,159,783; U.S. Patent No. 7,413,127;
U.S. Patent No. 7,726,575; U.S. Patent No. 8,294,969;
U.S. Patent No. 8,317,105; U.S. Patent No. 8,322,622;
U.S. Patent No. 8,366,005; U.S. Patent No. 8,371,507;
U.S. Patent No. 8,376,233; U.S. Patent No. 8,381,979;
U.S. Patent No. 8,390,909; U.S. Patent No. 8,408,464;
U.S. Patent No. 8,408,468; U.S. Patent No. 8,408,469;
U.S. Patent No. 8,424,768; U.S. Patent No. 8,448,863;
U.S. Patent No. 8,457,013; U.S. Patent No. 8,459,557;
U.S. Patent No. 8,469,272; U.S. Patent No. 8,474,712;
U.S. Patent No. 8,479,992; U.S. Patent No. 8,490,877;
U.S. Patent No. 8,517,271; U.S. Patent No. 8,523,076;
U.S. Patent No. 8,528,818; U.S. Patent No. 8,544,737;
U.S. Patent No. 8,548,242; U.S. Patent No. 8,548,420;
U.S. Patent No. 8,550,335; U.S. Patent No. 8,550,354;
U.S. Patent No. 8,550,357; U.S. Patent No. 8,556,174;
U.S. Patent No. 8,556,176; U.S. Patent No. 8,556,177;
U.S. Patent No. 8,559,767; U.S. Patent No. 8,599,957;
U.S. Patent No. 8,561,895; U.S. Patent No. 8,561,903;
U.S. Patent No. 8,561,905; U.S. Patent No. 8,565,107;
U.S. Patent No. 8,571,307; U.S. Patent No. 8,579,200;
U.S. Patent No. 8,583,924; U.S. Patent No. 8,584,945;
U.S. Patent No. 8,587,595; U.S. Patent No. 8,587,697;
U.S. Patent No. 8,588,869; U.S. Patent No. 8,590,789;
U.S. Patent No. 8,596,539; U.S. Patent No. 8,596,542;
U.S. Patent No. 8,596,543; U.S. Patent No. 8,599,271;
U.S. Patent No. 8,599,957; U.S. Patent No. 8,600,158;
U.S. Patent No. 8,600,167; U.S. Patent No. 8,602,309;
U.S. Patent No. 8,608,053; U.S. Patent No. 8,608,071;
U.S. Patent No. 8,611,309; U.S. Patent No. 8,615,487;
U.S. Patent No. 8,616,454; U.S. Patent No. 8,621,123;
U.S. Patent No. 8,622,303; U.S. Patent No. 8,628,013;
U.S. Patent No. 8,628,015; U.S. Patent No. 8,628,016;
U.S. Patent No. 8,629,926; U.S. Patent No. 8,630,491;
U.S. Patent No. 8,635,309; U.S. Patent No. 8,636,200;
U.S. Patent No. 8,636,212; U.S. Patent No. 8,636,215;
U.S. Patent No. 8,636,224; U.S. Patent No. 8,638,806;
U.S. Patent No. 8,640,958; U.S. Patent No. 8,640,960;
U.S. Patent No. 8,643,717; U.S. Patent No. 8,646,692;
U.S. Patent No. 8,646,694; U.S. Patent No. 8,657,200;
U.S. Patent No. 8,659,397; U.S. Patent No. 8,668,149;
U.S. Patent No. 8,678,285; U.S. Patent No. 8,678,286;
U.S. Patent No. 8,682,077; U.S. Patent No. 8,687,282;
U.S. Patent No. 8,692,927; U.S. Patent No. 8,695,880;
U.S. Patent No. 8,698,949; U.S. Patent No. 8,717,494;
U.S. Patent No. 8,717,494; U.S. Patent No. 8,720,783;
U.S. Patent No. 8,723,804; U.S. Patent No. 8,723,904;
U.S. Patent No. 8,727,223; U.S. Patent No. D702,237;
U.S. Patent No. 8,740,082; U.S. Patent No. 8,740,085;
U.S. Patent No. 8,746,563; U.S. Patent No. 8,750,445;
U.S. Patent No. 8,752,766; U.S. Patent No. 8,756,059;
U.S. Patent No. 8,757,495; U.S. Patent No. 8,760,563;
U.S. Patent No. 8,763,909; U.S. Patent No. 8,777,108;
U.S. Patent No. 8,777,109; U.S. Patent No. 8,779,898;
U.S. Patent No. 8,781,520; U.S. Patent No. 8,783,573;
U.S. Patent No. 8,789,757; U.S. Patent No. 8,789,758;
U.S. Patent No. 8,789,759; U.S. Patent No. 8,794,520;
U.S. Patent No. 8,794,522; U.S. Patent No. 8,794,525;
U.S. Patent No. 8,794,526; U.S. Patent No. 8,798,367;
U.S. Patent No. 8,807,431; U.S. Patent No. 8,807,432;
U.S. Patent No. 8,820,630; U.S. Patent No. 8,822,848;
U.S. Patent No. 8,824,692; U.S. Patent No. 8,824,696;
U.S. Patent No. 8,842,849; U.S. Patent No. 8,844,822;
U.S. Patent No. 8,844,823; U.S. Patent No. 8,849,019;
U.S. Patent No. 8,851,383; U.S. Patent No. 8,854,633;
U.S. Patent No. 8,866,963; U.S. Patent No. 8,868,421;
U.S. Patent No. 8,868,519; U.S. Patent No. 8,868,802;
U.S. Patent No. 8,868,803; U.S. Patent No. 8,870,074;
U.S. Patent No. 8,879,639; U.S. Patent No. 8,880,426;
U.S. Patent No. 8,881,983; U.S. Patent No. 8,881,987;
U.S. Patent No. 8,903,172; U.S. Patent No. 8,908,995;
U.S. Patent No. 8,910,870; U.S. Patent No. 8,910,875;
U.S. Patent No. 8,914,290; U.S. Patent No. 8,914,788;
U.S. Patent No. 8,915,439; U.S. Patent No. 8,915,444;
U.S. Patent No. 8,916,789; U.S. Patent No. 8,918,250;
U.S. Patent No. 8,918,564; U.S. Patent No. 8,925,818;
U.S. Patent No. 8,939,374; U.S. Patent No. 8,942,480;
U.S. Patent No. 8,944,313; U.S. Patent No. 8,944,327;
U.S. Patent No. 8,944,332; U.S. Patent No. 8,950,678;
U.S. Patent No. 8,967,468; U.S. Patent No. 8,971,346;
U.S. Patent No. 8,976,030; U.S. Patent No. 8,976,368;
U.S. Patent No. 8,978,981; U.S. Patent No. 8,978,983;
U.S. Patent No. 8,978,984; U.S. Patent No. 8,985,456;
U.S. Patent No. 8,985,457; U.S. Patent No. 8,985,459;
U.S. Patent No. 8,985,461; U.S. Patent No. 8,988,578;
U.S. Patent No. 8,988,590; U.S. Patent No. 8,991,704;
U.S. Patent No. 8,996,194; U.S. Patent No. 8,996,384;
U.S. Patent No. 9,002,641; U.S. Patent No. 9,007,368;
U.S. Patent No. 9,010,641; U.S. Patent No. 9,015,513;
U.S. Patent No. 9,016,576; U.S. Patent No. 9,022,288;
U.S. Patent No. 9,030,964; U.S. Patent No. 9,033,240;
U.S. Patent No. 9,033,242; U.S. Patent No. 9,036,054;
U.S. Patent No. 9,037,344; U.S. Patent No. 9,038,911;
U.S. Patent No. 9,038,915; U.S. Patent No. 9,047,098;
U.S. Patent No. 9,047,359; U.S. Patent No. 9,047,420;
U.S. Patent No. 9,047,525; U.S. Patent No. 9,047,531;
U.S. Patent No. 9,053,055; U.S. Patent No. 9,053,378;
U.S. Patent No. 9,053,380; U.S. Patent No. 9,058,526;
U.S. Patent No. 9,064,165; U.S. Patent No. 9,064,167;
U.S. Patent No. 9,064,168; U.S. Patent No. 9,064,254;
U.S. Patent No. 9,066,032; U.S. Patent No. 9,070,032;
U.S. Design Patent No. D716,285;
U.S. Design Patent No. D723,560;
U.S. Design Patent No. D730,357;
U.S. Design Patent No. D730,901;
U.S. Design Patent No. D730,902
U.S. Design Patent No. D733,112;
U.S. Design Patent No. D734,339;
International Publication No. 2013/163789;
International Publication No. 2013/173985;
International Publication No. 2014/019130;
International Publication No. 2014/110495;
U.S. Patent Application Publication No. 2008/0185432;
U.S. Patent Application Publication No. 2009/0134221;
U.S. Patent Application Publication No. 2010/0177080;
U.S. Patent Application Publication No. 2010/0177076;
U.S. Patent Application Publication No. 2010/0177707;
U.S. Patent Application Publication No. 2010/0177749;
U.S. Patent Application Publication No. 2010/0265880;
U.S. Patent Application Publication No. 2011/0202554;
U.S. Patent Application Publication No. 2012/0111946;
U.S. Patent Application Publication No. 2012/0168511;
U.S. Patent Application Publication No. 2012/0168512;
U.S. Patent Application Publication No. 2012/0193423;
U.S. Patent Application Publication No. 2012/0203647;
U.S. Patent Application Publication No. 2012/0223141;
U.S. Patent Application Publication No. 2012/0228382;
U.S. Patent Application Publication No. 2012/0248188;
U.S. Patent Application Publication No. 2013/0043312;
U.S. Patent Application Publication No. 2013/0082104;
U.S. Patent Application Publication No. 2013/0175341;
U.S. Patent Application Publication No. 2013/0175343;
U.S. Patent Application Publication No. 2013/0257744;
U.S. Patent Application Publication No. 2013/0257759;
U.S. Patent Application Publication No. 2013/0270346;
U.S. Patent Application Publication No. 2013/0287258;
U.S. Patent Application Publication No. 2013/0292475;
U.S. Patent Application Publication No. 2013/0292477;
U.S. Patent Application Publication No. 2013/0293539;
U.S. Patent Application Publication No. 2013/0293540;
U.S. Patent Application Publication No. 2013/0306728;
U.S. Patent Application Publication No. 2013/0306731;
U.S. Patent Application Publication No. 2013/0307964;
U.S. Patent Application Publication No. 2013/0308625;
U.S. Patent Application Publication No. 2013/0313324;
U.S. Patent Application Publication No. 2013/0313325;
U.S. Patent Application Publication No. 2013/0342717;
U.S. Patent Application Publication No. 2014/0001267;
U.S. Patent Application Publication No. 2014/0008439;
U.S. Patent Application Publication No. 2014/0025584;
U.S. Patent Application Publication No. 2014/0034734;
U.S. Patent Application Publication No. 2014/0036848;
U.S. Patent Application Publication No. 2014/0039693;
U.S. Patent Application Publication No. 2014/0042814;
U.S. Patent Application Publication No. 2014/0049120;
U.S. Patent Application Publication No. 2014/0049635;
U.S. Patent Application Publication No. 2014/0061306;
U.S. Patent Application Publication No. 2014/0063289;
U.S. Patent Application Publication No. 2014/0066136;
U.S. Patent Application Publication No. 2014/0067692;
U.S. Patent Application Publication No. 2014/0070005;
U.S. Patent Application Publication No. 2014/0071840;
U.S. Patent Application Publication No. 2014/0074746;
U.S. Patent Application Publication No. 2014/0076974;
U.S. Patent Application Publication No. 2014/0078341;
U.S. Patent Application Publication No. 2014/0078345;
U.S. Patent Application Publication No. 2014/0097249;
U.S. Patent Application Publication No. 2014/0098792;
U.S. Patent Application Publication No. 2014/0100813;
U.S. Patent Application Publication No. 2014/0103115;
U.S. Patent Application Publication No. 2014/0104413;
U.S. Patent Application Publication No. 2014/0104414;
U.S. Patent Application Publication No. 2014/0104416;
U.S. Patent Application Publication No. 2014/0104451;
U.S. Patent Application Publication No. 2014/0106594;
U.S. Patent Application Publication No. 2014/0106725;
U.S. Patent Application Publication No. 2014/0108010;
U.S. Patent Application Publication No. 2014/0108402;
U.S. Patent Application Publication No. 2014/0110485;
U.S. Patent Application Publication No. 2014/0114530;
U.S. Patent Application Publication No. 2014/0124577;
U.S. Patent Application Publication No. 2014/0124579;
U.S. Patent Application Publication No. 2014/0125842;
U.S. Patent Application Publication No. 2014/0125853;
U.S. Patent Application Publication No. 2014/0125999;
U.S. Patent Application Publication No. 2014/0129378;
U.S. Patent Application Publication No. 2014/0131438;
U.S. Patent Application Publication No. 2014/0131441;
U.S. Patent Application Publication No. 2014/0131443;
U.S. Patent Application Publication No. 2014/0131444;
U.S. Patent Application Publication No. 2014/0131445;
U.S. Patent Application Publication No. 2014/0131448;
U.S. Patent Application Publication No. 2014/0133379;
U.S. Patent Application Publication No. 2014/0136208;
U.S. Patent Application Publication No. 2014/0140585;
U.S. Patent Application Publication No. 2014/0151453;
U.S. Patent Application Publication No. 2014/0152882;
U.S. Patent Application Publication No. 2014/0158770;
U.S. Patent Application Publication No. 2014/0159869;
U.S. Patent Application Publication No. 2014/0166755;
U.S. Patent Application Publication No. 2014/0166759;
U.S. Patent Application Publication No. 2014/0168787;
U.S. Patent Application Publication No. 2014/0175165;
U.S. Patent Application Publication No. 2014/0175172;
U.S. Patent Application Publication No. 2014/0191644;
U.S. Patent Application Publication No. 2014/0191913;
U.S. Patent Application Publication No. 2014/0197238;
U.S. Patent Application Publication No. 2014/0197239;
U.S. Patent Application Publication No. 2014/0197304;
U.S. Patent Application Publication No. 2014/0214631;
U.S. Patent Application Publication No. 2014/0217166;
U.S. Patent Application Publication No. 2014/0217180;
U.S. Patent Application Publication No. 2014/0231500;
U.S. Patent Application Publication No. 2014/0232930;
U.S. Patent Application Publication No. 2014/0247315;
U.S. Patent Application Publication No. 2014/0263493;
U.S. Patent Application Publication No. 2014/0263645;
U.S. Patent Application Publication No. 2014/0267609;
U.S. Patent Application Publication No. 2014/0270196;
U.S. Patent Application Publication No. 2014/0270229;
U.S. Patent Application Publication No. 2014/0278387;
U.S. Patent Application Publication No. 2014/0278391;
U.S. Patent Application Publication No. 2014/0282210;
U.S. Patent Application Publication No. 2014/0284384;
U.S. Patent Application Publication No. 2014/0288933;
U.S. Patent Application Publication No. 2014/0297058;
U.S. Patent Application Publication No. 2014/0299665;
U.S. Patent Application Publication No. 2014/0312121;
U.S. Patent Application Publication No. 2014/0319220;
U.S. Patent Application Publication No. 2014/0319221;
U.S. Patent Application Publication No. 2014/0326787;
U.S. Patent Application Publication No. 2014/0332590;
U.S. Patent Application Publication No. 2014/0344943;
U.S. Patent Application Publication No. 2014/0346233;
U.S. Patent Application Publication No. 2014/0351317;
U.S. Patent Application Publication No. 2014/0353373;
U.S. Patent Application Publication No. 2014/0361073;
U.S. Patent Application Publication No. 2014/0361082;
U.S. Patent Application Publication No. 2014/0362184;
U.S. Patent Application Publication No. 2014/0363015;
U.S. Patent Application Publication No. 2014/0369511;
U.S. Patent Application Publication No. 2014/0374483;
U.S. Patent Application Publication No. 2014/0374485;
U.S. Patent Application Publication No. 2015/0001301;
U.S. Patent Application Publication No. 2015/0001304;
U.S. Patent Application Publication No. 2015/0003673;
U.S. Patent Application Publication No. 2015/0009338;
U.S. Patent Application Publication No. 2015/0009610;
U.S. Patent Application Publication No. 2015/0014416;
U.S. Patent Application Publication No. 2015/0021397;
U.S. Patent Application Publication No. 2015/0028102;
U.S. Patent Application Publication No. 2015/0028103;
U.S. Patent Application Publication No. 2015/0028104;
U.S. Patent Application Publication No. 2015/0029002;
U.S. Patent Application Publication No. 2015/0032709;
U.S. Patent Application Publication No. 2015/0039309;
U.S. Patent Application Publication No. 2015/0039878;
U.S. Patent Application Publication No. 2015/0040378;
U.S. Patent Application Publication No. 2015/0048168;
U.S. Patent Application Publication No. 2015/0049347;
U.S. Patent Application Publication No. 2015/0051992;
U.S. Patent Application Publication No. 2015/0053766;
U.S. Patent Application Publication No. 2015/0053768;
U.S. Patent Application Publication No. 2015/0053769;
U.S. Patent Application Publication No. 2015/0060544;
U.S. Patent Application Publication No. 2015/0062366;
U.S. Patent Application Publication No. 2015/0063215;
U.S. Patent Application Publication No. 2015/0063676;
U.S. Patent Application Publication No. 2015/0069130;
U.S. Patent Application Publication No. 2015/0071819;
U.S. Patent Application Publication No. 2015/0083800;
U.S. Patent Application Publication No. 2015/0086114;
U.S. Patent Application Publication No. 2015/0088522;
U.S. Patent Application Publication No. 2015/0096872;
U.S. Patent Application Publication No. 2015/0099557;
U.S. Patent Application Publication No. 2015/0100196;
U.S. Patent Application Publication No. 2015/0102109;
U.S. Patent Application Publication No. 2015/0115035;
U.S. Patent Application Publication No. 2015/0127791;
U.S. Patent Application Publication No. 2015/0128116;
U.S. Patent Application Publication No. 2015/0129659;
U.S. Patent Application Publication No. 2015/0133047;
U.S. Patent Application Publication No. 2015/0134470;
U.S. Patent Application Publication No. 2015/0136851;
U.S. Patent Application Publication No. 2015/0136854;
U.S. Patent Application Publication No. 2015/0142492;
U.S. Patent Application Publication No. 2015/0144692;
U.S. Patent Application Publication No. 2015/0144698;
U.S. Patent Application Publication No. 2015/0144701;
U.S. Patent Application Publication No. 2015/0149946;
U.S. Patent Application Publication No. 2015/0161429;
U.S. Patent Application Publication No. 2015/0169925;
U.S. Patent Application Publication No. 2015/0169929;
U.S. Patent Application Publication No. 2015/0178523;
U.S. Patent Application Publication No. 2015/0178534;
U.S. Patent Application Publication No. 2015/0178535;
U.S. Patent Application Publication No. 2015/0178536;
U.S. Patent Application Publication No. 2015/0178537;
U.S. Patent Application Publication No. 2015/0181093;
U.S. Patent Application Publication No. 2015/0181109;
U.S. Patent Application No. 13/367,978 for a Laser Scanning Module Employing an Elastomeric U-Hinge Based Laser Scanning Assembly, filed February 7, 2012 (Feng et al.);
U.S. Patent Application No. 29/458,405 for an Electronic Device, filed June 19, 2013 (Fitch et al.);
U.S. Patent Application No. 29/459,620 for an Electronic Device Enclosure, filed July 2, 2013 (London et al.);
U.S. Patent Application No. 29/468,118 for an Electronic Device Case, filed September 26, 2013 (Oberpriller et al.);
U.S. Patent Application No. 14/150,393 for Indicia-reader Having Unitary Construction Scanner, filed January 8, 2014 (Colavito et al.);
U.S. Patent Application No. 14/200,405 for Indicia Reader for Size-Limited Applications filed March 7, 2014 (Feng et al.);
U.S. Patent Application No. 14/231,898 for Hand-Mounted Indicia-Reading Device with Finger Motion Triggering filed April 1, 2014 (Van Horn et al.);
U.S. Patent Application No. 29/486,759 for an Imaging Terminal, filed April 2, 2014 (Oberpriller et al.);
U.S. Patent Application No. 14/257,364 for Docking System and Method Using Near Field Communication filed April 21, 2014 (Showering);
U.S. Patent Application No. 14/264,173 for Autofocus Lens System for Indicia Readers filed April 29, 2014 (Ackley et al.);
*U. S. Patent Application No.* 14/277, 337 for MULTIPURPOSE OPTICAL READER, filed May 14, 2014 (Jovanovski et al.*);*
*U.S. Patent Application No.* 14/283,282 for TERMINAL HAVING ILLUMINATION AND FOCUS CONTROL filed May 21, 2014 (Liu et al.);
U.S. Patent Application No. 14/327,827 for a MOBILE-PHONE ADAPTER FOR ELECTRONIC TRANSACTIONS, filed July 10, 2014 (Hejl);
U.S. Patent Application No. 14/334,934 for a SYSTEM AND METHOD FOR INDICIA VERIFICATION, filed July 18, 2014 (Hejl);
U.S. Patent Application No. 14/339,708 for LASER SCANNING CODE SYMBOL READING SYSTEM, filed July 24, 2014 (Xian et al.);
U.S. Patent Application No. 14/340,627 for an AXIALLY REINFORCED FLEXIBLE SCAN ELEMENT, filed July 25, 2014 (Rueblinger et al.);
U.S. Patent Application No. 14/446,391 for MULTIFUNCTION POINT OF SALE APPARATUS WITH OPTICAL SIGNATURE CAPTURE filed July 30, 2014 (Good et al.);
U.S. Patent Application No. 14/452,697 for INTERACTIVE INDICIA READER, filed August 6, 2014 (Todeschini);
U.S. Patent Application No. 14/453,019 for DIMENSIONING SYSTEM WITH GUIDED ALIGNMENT, filed August 6, 2014 (Li et al.);
U.S. Patent Application No. 14/462,801 for MOBILE COMPUTING DEVICE WITH DATA COGNITION SOFTWARE, filed on August 19, 2014 (Todeschini et al.);
U.S. Patent Application No. 14/483,056 for VARIABLE DEPTH OF FIELD BARCODE SCANNER filed Sep. 10, 2014 (McCloskey et al.);
U.S. Patent Application No. 14/513,808 for IDENTIFYING INVENTORY ITEMS IN A STORAGE FACILITY filed Oct. 14, 2014 (Singel et al.);
U.S. Patent Application No. 14/519,195 for HANDHELD DIMENSIONING SYSTEM WITH FEEDBACK filed Oct. 21, 2014 (Laffargue et al.);
U.S. Patent Application No. 14/519,179 for DIMENSIONING SYSTEM WITH MULTIPATH INTERFERENCE MITIGATION filed Oct. 21, 2014 (Thuries et al.);
U.S. Patent Application No. 14/519,211 for SYSTEM AND METHOD FOR DIMENSIONING filed Oct. 21, 2014 (Ackley et al.);
U.S. Patent Application No. 14/519,233 for HANDHELD DIMENSIONER WITH DATA-QUALITY INDICATION filed Oct. 21, 2014 (Laffargue et al.);
U.S. Patent Application No. 14/519,249 for HANDHELD DIMENSIONING SYSTEM WITH MEASUREMENT-CONFORMANCE FEEDBACK filed Oct. 21, 2014 (Ackley et al.);
U.S. Patent Application No. 14/527,191 for METHOD AND SYSTEM FOR RECOGNIZING SPEECH USING WILDCARDS IN AN EXPECTED RESPONSE filed Oct. 29, 2014 (Braho et al.);
U.S. Patent Application No. 14/529,563 for ADAPTABLE INTERFACE FOR A MOBILE COMPUTING DEVICE filed Oct. 31, 2014 (Schoon et al.);
U.S. Patent Application No. 14/529,857 for BARCODE READER WITH SECURITY FEATURES filed October 31, 2014 (Todeschini et al.);
U.S. Patent Application No. 14/398,542 for PORTABLE ELECTRONIC DEVICES HAVING A SEPARATE LOCATION TRIGGER UNIT FOR USE IN CONTROLLING AN APPLICATION UNIT filed November 3, 2014 (Bian et al.);
U.S. Patent Application No. 14/531,154 for DIRECTING AN INSPECTOR THROUGH AN INSPECTION filed Nov. 3, 2014 (Miller et al.);
U.S. Patent Application No. 14/533,319 for BARCODE SCANNING SYSTEM USING WEARABLE DEVICE WITH EMBEDDED CAMERA filed Nov. 5, 2014 (Todeschini);
U.S. Patent Application No. 14/535,764 for CONCATENATED EXPECTED RESPONSES FOR SPEECH RECOGNITION filed Nov. 7, 2014 (Braho et al.);
U.S. Patent Application No. 14/568,305 for AUTO-CONTRAST VIEWFINDER FOR AN INDICIA READER filed Dec. 12, 2014 (Todeschini);
U.S. Patent Application No. 14/573,022 for DYNAMIC DIAGNOSTIC INDICATOR GENERATION filed Dec. 17, 2014 (Goldsmith);
U.S. Patent Application No. 14/578,627 for SAFETY SYSTEM AND METHOD filed Dec. 22, 2014 (Ackley et al.);
U.S. Patent Application No. 14/580,262 for MEDIA GATE FOR THERMAL TRANSFER PRINTERS filed Dec. 23, 2014 (Bowles);
U.S. Patent Application No. 14/590,024 for SHELVING AND PACKAGE LOCATING SYSTEMS FOR DELIVERY VEHICLES filed January 6, 2015 (Payne);
U.S. Patent Application No. 14/596,757 for SYSTEM AND METHOD FOR DETECTING BARCODE PRINTING ERRORS filed Jan. 14, 2015 (Ackley);
U.S. Patent Application No. 14/416,147 for OPTICAL READING APPARATUS HAVING VARIABLE SETTINGS filed January 21, 2015 (Chen et al.);
U.S. Patent Application No. 14/614,706 for DEVICE FOR SUPPORTING AN ELECTRONIC TOOL ON A USER'S HAND filed Feb. 5, 2015 (Oberpriller et al.);
U.S. Patent Application No. 14/614,796 for CARGO APPORTIONMENT TECHNIQUES filed Feb. 5, 2015 (Morton et al.);
U.S. Patent Application No. 29/516,892 for TABLE COMPUTER filed Feb. 6, 2015 (Bidwell et al.);
U.S. Patent Application No. 14/619,093 for METHODS FOR TRAINING A SPEECH RECOGNITION SYSTEM filed Feb. 11, 2015 (Pecorari);
U.S. Patent Application No. 14/628,708 for DEVICE, SYSTEM, AND METHOD FOR DETERMINING THE STATUS OF CHECKOUT LANES filed Feb. 23, 2015 (Todeschini);
U.S. Patent Application No. 14/630,841 for TERMINAL INCLUDING IMAGING ASSEMBLY filed Feb. 25, 2015 (Gomez et al.);
U.S. Patent Application No. 14/635,346 for SYSTEM AND METHOD FOR RELIABLE STORE-AND-FORWARD DATA HANDLING BY ENCODED INFORMATION READING TERMINALS filed March 2, 2015 (Sevier);
U.S. Patent Application No. 29/519,017 for SCANNER filed March 2, 2015 (Zhou et al.);
U.S. Patent Application No. 14/405,278 for DESIGN PATTERN FOR SECURE STORE filed March 9, 2015 (Zhu et al.);
U.S. Patent Application No. 14/660,970 for DECODABLE INDICIA READING TERMINAL WITH COMBINED ILLUMINATION filed March 18, 2015 (Kearney et al.);
U.S. Patent Application No. 14/661,013 for REPROGRAMMING SYSTEM AND METHOD FOR DEVICES INCLUDING PROGRAMMING SYMBOL filed March 18, 2015 (Soule et al.);
U.S. Patent Application No. 14/662,922 for MULTIFUNCTION POINT OF SALE SYSTEM filed March 19, 2015 (Van Horn et al.);
U.S. Patent Application No. 14/663,638 for VEHICLE MOUNT COMPUTER WITH CONFIGURABLE IGNITION SWITCH BEHAVIOR filed March 20, 2015 (Davis et al.);
U.S. Patent Application No. 14/664,063 for METHOD AND APPLICATION FOR SCANNING A BARCODE WITH A SMART DEVICE WHILE CONTINUOUSLY RUNNING AND DISPLAYING AN APPLICATION ON THE SMART DEVICE DISPLAY filed March 20, 2015 (Todeschini);
U.S. Patent Application No. 14/669,280 for TRANSFORMING COMPONENTS OF A WEB PAGE TO VOICE PROMPTS filed March 26, 2015 (Funyak et al.);
U.S. Patent Application No. 14/674,329 for AIMER FOR BARCODE SCANNING filed March 31, 2015 (Bidwell);
U.S. Patent Application No. 14/676,109 for INDICIA READER filed April 1, 2015 (Huck);
U.S. Patent Application No. 14/676,327 for DEVICE MANAGEMENT PROXY FOR SECURE DEVICES filed April 1, 2015 (Yeakley et al.);
U.S. Patent Application No. 14/676,898 for NAVIGATION SYSTEM CONFIGURED TO INTEGRATE MOTION SENSING DEVICE INPUTS filed April 2, 2015 (Showering);
U.S. Patent Application No. 14/679,275 for DIMENSIONING SYSTEM CALIBRATION SYSTEMS AND METHODS filed April 6, 2015 (Laffargue et al.);
U.S. Patent Application No. 29/523,098 for HANDLE FOR A TABLET COMPUTER filed April 7, 2015 (Bidwell et al.);
U.S. Patent Application No. 14/682,615 for SYSTEM AND METHOD FOR POWER MANAGEMENT OF MOBILE DEVICES filed April 9, 2015 (Murawski et al.);
U.S. Patent Application No. 14/686,822 for MULTIPLE PLATFORM SUPPORT SYSTEM AND METHOD filed April 15, 2015 (Qu et al.);
U.S. Patent Application No. 14/687,289 for SYSTEM FOR COMMUNICATION VIA A PERIPHERAL HUB filed April 15, 2015 (Kohtz et al.);
U.S. Patent Application No. 29/524,186 for SCANNER filed April 17, 2015 (Zhou et al.);
U.S. Patent Application No. 14/695,364 for MEDICATION MANAGEMENT SYSTEM filed April 24, 2015 (Sewell et al.);
U.S. Patent Application No. 14/695,923 for SECURE UNATTENDED NETWORK AUTHENTICATION filed April 24, 2015 (Kubler et al.);
U.S. Patent Application No. 29/525,068 for TABLET COMPUTER WITH REMOVABLE SCANNING DEVICE filed April 27, 2015 (Schulte et al.);
U.S. Patent Application No. 14/699,436 for SYMBOL READING SYSTEM HAVING PREDICTIVE DIAGNOSTICS filed April 29, 2015 (Nahill et al.);
U.S. Patent Application No. 14/702,110 for SYSTEM AND METHOD FOR REGULATING BARCODE DATA INJECTION INTO A RUNNING APPLICATION ON A SMART DEVICE filed May 1, 2015 (Todeschini et al.);
U.S. Patent Application No. 14/702,979 for TRACKING BATTERY CONDITIONS filed May 4, 2015 (Young et al.);
U.S. Patent Application No. 14/704,050 for INTERMEDIATE LINEAR POSITIONING filed May 5, 2015 (Charpentier et al.);
U.S. Patent Application No. 14/705,012 for HANDS-FREE HUMAN MACHINE INTERFACE RESPONSIVE TO A DRIVER OF A VEHICLE filed May 6, 2015 (Fitch et al.);
U.S. Patent Application No. 14/705,407 for METHOD AND SYSTEM TO PROTECT SOFTWARE-BASED NETWORK-CONNECTED DEVICES FROM ADVANCED PERSISTENT THREAT filed May 6, 2015 (Hussey et al.);
U.S. Patent Application No. 14/707,037 for SYSTEM AND METHOD FOR DISPLAY OF INFORMATION USING A VEHICLE-MOUNT COMPUTER filed May 8, 2015 (Chamberlin);
U.S. Patent Application No. 14/707,123 for APPLICATION INDEPENDENT DEX/UCS INTERFACE filed May 8, 2015 (Pape);
U.S. Patent Application No. 14/707,492 for METHOD AND APPARATUS FOR READING OPTICAL INDICIA USING A PLURALITY OF DATA SOURCES filed May 8, 2015 (Smith et al.);
U.S. Patent Application No. 14/710,666 for PRE-PAID USAGE SYSTEM FOR ENCODED INFORMATION READING TERMINALS filed May 13, 2015 (Smith);
U.S. Patent Application No. 29/526,918 for CHARGING BASE filed May 14, 2015 (Fitch et al.);
U.S. Patent Application No. 14/715,672 for AUGUMENTED REALITY ENABLED HAZARD DISPLAY filed May 19, 2015 (Venkatesha et al.);
U.S. Patent Application No. 14/715,916 for EVALUATING IMAGE VALUES filed May 19, 2015 (Ackley);
U.S. Patent Application No. 14/722,608 for INTERACTIVE USER INTERFACE FOR CAPTURING A DOCUMENT IN AN IMAGE SIGNAL filed May 27, 2015 (Showering et al.);
U.S. Patent Application No. 29/528,165 for IN-COUNTER BARCODE SCANNER filed May 27, 2015 (Oberpriller et al.);
U.S. Patent Application No. 14/724,134 for ELECTRONIC DEVICE WITH WIRELESS PATH SELECTION CAPABILITY filed May 28, 2015 (Wang et al.);
U.S. Patent Application No. 14/724,849 for METHOD OF PROGRAMMING THE DEFAULT CABLE INTERFACE SOFTWARE IN AN INDICIA READING DEVICE filed May 29, 2015 (Barten);
U.S. Patent Application No. 14/724,908 for IMAGING APPARATUS HAVING IMAGING ASSEMBLY filed May 29, 2015 (Barber et al.);
U.S. Patent Application No. 14/725,352 for APPARATUS AND METHODS FOR MONITORING ONE OR MORE PORTABLE DATA TERMINALS (Caballero et al.);
U.S. Patent Application No. 29/528,590 for ELECTRONIC DEVICE filed May 29, 2015 (Fitch et al.);
U.S. Patent Application No. 29/528,890 for MOBILE COMPUTER HOUSING filed June 2, 2015 (Fitch et al.);
U.S. Patent Application No. 14/728,397 for DEVICE MANAGEMENT USING VIRTUAL INTERFACES CROSS-REFERENCE TO RELATED APPLICATIONS filed June 2, 2015 (Caballero);
U.S. Patent Application No. 14/732,870 for DATA COLLECTION MODULE AND SYSTEM filed June 8, 2015 (Powilleit);
U.S. Patent Application No. 29/529,441 for INDICIA READING DEVICE filed June 8, 2015 (Zhou et al.);
U.S. Patent Application No. 14/735,717 for INDICIA-READING SYSTEMS HAVING AN INTERFACE WITH A USER'S NERVOUS SYSTEM filed June 10, 2015 (Todeschini);
U.S. Patent Application No. 14/738,038 for METHOD OF AND SYSTEM FOR DETECTING OBJECT WEIGHING INTERFERENCES filed June 12, 2015 (Amundsen et al.);
U.S. Patent Application No. 14/740,320 for TACTILE SWITCH FOR A MOBILE ELECTRONIC DEVICE filed June 16, 2015 (Bandringa);
U.S. Patent Application No. 14/740,373 for CALIBRATING A VOLUME DIMENSIONER filed June 16, 2015 (Ackley et al.);
U.S. Patent Application No. 14/742,818 for INDICIA READING SYSTEM EMPLOYING DIGITAL GAIN CONTROL filed June 18, 2015 (Xian et al.);
U.S. Patent Application No. 14/743,257 for WIRELESS MESH POINT PORTABLE DATA TERMINAL filed June 18, 2015 (Wang et al.);
U.S. Patent Application No. 29/530,600 for CYCLONE filed June 18, 2015 (Vargo et al);
U.S. Patent Application No. 14/744,633 for IMAGING APPARATUS COMPRISING IMAGE SENSOR ARRAY HAVING SHARED GLOBAL SHUTTER CIRCUITRY filed June 19, 2015 (Wang);
U.S. Patent Application No. 14/744,836 for CLOUD-BASED SYSTEM FOR READING OF DECODABLE INDICIA filed June 19, 2015 (Todeschini et al.);
U.S. Patent Application No. 14/745,006 for SELECTIVE OUTPUT OF DECODED MESSAGE DATA filed June 19, 2015 (Todeschini et al.);
U.S. Patent Application No. 14/747,197 for OPTICAL PATTERN PROJECTOR filed June 23, 2015 (Thuries et al.);
U.S. Patent Application No. 14/747,490 for DUAL-PROJECTOR THREE-DIMENSIONAL SCANNER filed June 23, 2015 (Jovanovski et al.);and
U.S. Patent Application No. 14/748,446 for CORDLESS INDICIA READER WITH A MULTIFUNCTION COIL FOR WIRELESS CHARGING AND EAS DEACTIVATION, filed June 24, 2015 (Xie et al.).

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A package status monitoring system comprising:
a plurality of package analyzers configured to analyze the condition of a package at multiple locations as the package is transported from a starting location to a final destination, each package analyzer configured to produce package status information regarding the condition of the package;
a package status server configured to receive the package status information from the multiple locations through a communications network; and
a database configured to store the package status information received by the package status server;
wherein the package status server enables a remote user device to access the package status information.

2. The package status monitoring system of claim 1, wherein each package analyzer is configured to monitor at least one outside surface of the package.

3. The package status monitoring system of 2, wherein each package analyzer includes a camera configured to optically obtain at least one image of the package.

4. The package status monitoring system of claim 3, wherein each package analyzer is further configured to identify various types of defects in the at least one outside surface of the package based on the at least one image.

5. The package status monitoring system of claim 4, wherein at least one of the package status server and package analyzers is configured to highlight the defects in the at least one image.

6. The package status monitoring system of claim 3, wherein the package status server is configured to graphically align images of the at least one outside surface of the package optically obtained by the plurality of package analyzers.

7. The package status monitoring system of claim 1, wherein the package status information includes at least one of a package identification number, images, highlighted defects, locations of defects on the package, features derived from the images, a time when the images were obtained, and the location between the starting location and final destination where the images were obtained.
